Europäisches Patentamt

European Patent Office

Office européen des brevets

(19)

(11) Veröffentlichungsnummer: **0 020 855**
**B1**

(12) **EUROPÄISCHE PATENTSCHRIFT**

(45) Veröffentlichungstag der Patentschrift: **09.03.83**

(21) Anmeldenummer: **80101076.0**

(22) Anmeldetag: **04.03.80**

(51) Int. Cl.³: **G 03 B 27/73**

(54) Verfahren und Vorrichtung zur Eichung eines Farbkopiergerätes.

(30) Priorität: **23.03.79 DE 2911566**

(43) Veröffentlichungstag der Anmeldung:
**07.01.81 Patentblatt 81/1**

(45) Bekanntmachung des Hinweises auf die Patenterteilung:
**09.03.83 Patentblatt 83/10**

(84) Benannte Vertragsstaaten:
**BE CH FR GB IT NL**

(56) Entgegenhaltungen:
**DE - A - 2 356 277**
**DE - A - 2 803 381**
**DE - B - 1 572 236**
**DE - B - 1 597 047**
**DE - B - 2 246 544**
**US - A - 4 087 180**
**US - A - 4 167 327**
**US - A - 4 174 173**

(73) Patentinhaber: **AGFA-GEVAERT Aktiengesellschaft
D-5090 Leverkusen 1 (DE)**

(72) Erfinder: **Findeis, Günter
Wallbergstrasse 18D
D-8021 Sauerlach (DE)**
Erfinder: **Fergg, Berthold, Dr.
Enzianring 3
D-8021 Taufkirchen (DE)**
Erfinder: **Zahn, Wolfgang, Dr.
Landfriedstrasse 1
D-8000 München 90 (DE)**
Erfinder: **Kuhn, Gerhard, Dr.
HT v. Böttingerstrasse 14
D-5090 Leverkusen (DE)**

Courier Press, Leamington Spa, England.

## Verfahren und Vorrichtung zur Eichung eines Farbkopiergerätes

Die Erfindung betrifft ein Verfahren und eine Vorrichtung zur Eichung eines Farbkopiergerätes mit einer fotoelektrischen Farbbelichtungssteuervorrichtung aufgrund der Meßergebnisse von Testkopien, die von einer Eichvorlage mit vorgegebenen Koperlichtmengen in den drei Grundfarben belichtet werden.

Es wurde bereits bisher so verfahren, daß von einer Eichvorlage mittlerer Dichte Mittels der fotoelektrischen Farbbelichtungssteuervorrichtung eine Eichkopie erstellt wurde. Die entwickelte Kopie wurde beurteilt und es wurden empirisch die Korrekturen angegeben, die veraussichtlich zum Erzielen einer befriedigenden Korrektur nötig waren. Mit diesen Korrekturen wurde dann der Kopiervorgang des Eichnegativs wiederholt und wenn diese Korrekturen zu einem positiven Ergebnis geführt hatten, wurden diese Korrekturwerte als Änderung der Empfindlichkeit der fotoelektrischen Belichtungssteuervorrichtung in die entsprechenden Speicherpotentiometer übernommen (s. DE—PS 2 246 544).

Dieses Verfahren hatte den Nachteil, daß verschiedene Schritte erforderlich waren, deren Ergebnis auf der subjektiven Beurteilung der Kopie und der erforderlichen Korrekturwerte beruht, so daß u.U. mehrere Schritte notwendig waren, um die richtige Einstellung des Kopiergerätes zu erreichen.

Aufgabe der Erfindung ist es, ein Eichverfahren zu schaffen, das aufgrund objektiver Messung ohne die Notwendigkeit besonderer Erfahrung die richtige Eichung eines Kopiergerätes in aller Regel in einem Schritt ermöglicht.

Diese Aufgabe wird gelöst durch die in dem Anspruch 1 beschriebene Erfindung.

Das erfindungsgemäße Verfahren verwendet synthetische Eichvorlage. Diese umfaßt z.B. eine siebenstufige Grautreppe, deren vierte (mittlere) Stufe z.B. eine Dichte von 0,7 aufweist. Außerdem ist die Farbe der Grautreppe so gewählt, daß in allen sieben Abschnitten der Grautreppe alle drei Grundfarbenanteile noch gut reproduzierbar meßbar sind.

Die Ausmessung der entwickelten Grauflächen dieser mit einem bestimmten Aufnahmematerial hergestellten Vorlage liefert eine für dieses Material kennzeichnende sensitometrische Kurve.

Wird nun diese insgesamt eine mittlere Dichte aufweisende Eichvorlage mittels der fotoelektrischen Belichtungssteuervorrichtung des Kopiergerätes auf ein übliches Kopiermaterial aufkopiert, so lassen sich die auf diese Weise erzielten Kopien der einzelnen Grautreppenflächen mit den jeweiligen Farbanteilen den Meßwerten der Eichvorlage gegenüberstellen. Wird mit der Eichvorlage zugleich angegeben, bei welchem Kopiedichtewert eines bestimmten Feldes der Grautreppe insgesamt befriedigende Kopien erreicht werden, so ist es möglich, die erforderlichen Änderungen der Kopierlichtmenge für das betreffende Feld der Grautreppe mit guter Näherung zu errechnen. Die auf diese Weise errechneten Änderungen der Kopierlichtmenge lassen sich dann exakt in die Belichtungssteuervorrichtung übertragen, so daß in aller Regel schon mit einem einzigen Eichschritt eine richtige Einstellung des Kopiergerätes erzielt wird.

Weitere Einzelheiten und Vorteile des vorgeschlagenen Verfahrens, sowie einer Vorrichtung zu seiner Durchführung, ergeben sich aus den Unteransprüchen im Zusammenhang mit der Beschreibung eines bevorzugten Ausführungsbeispiels, das anhand der Figuren eingehend erläutert ist. Es zeigen:

Fig. 1 schematisch den Aufbau einer Eichvorlage,
Fig. 2 ein Blockschaltbild zur Auswertung von Eichvorlage und Kopie derselben zur Eichung der Belichtungssteuervorrichtung,
Fig. 3 das Densitometer zur Messung der Vorlagendichten und
Fig. 4 ein Diagramm mit einer Übergangsfunktion von der Vorlagendichte zur Kopiedichte.

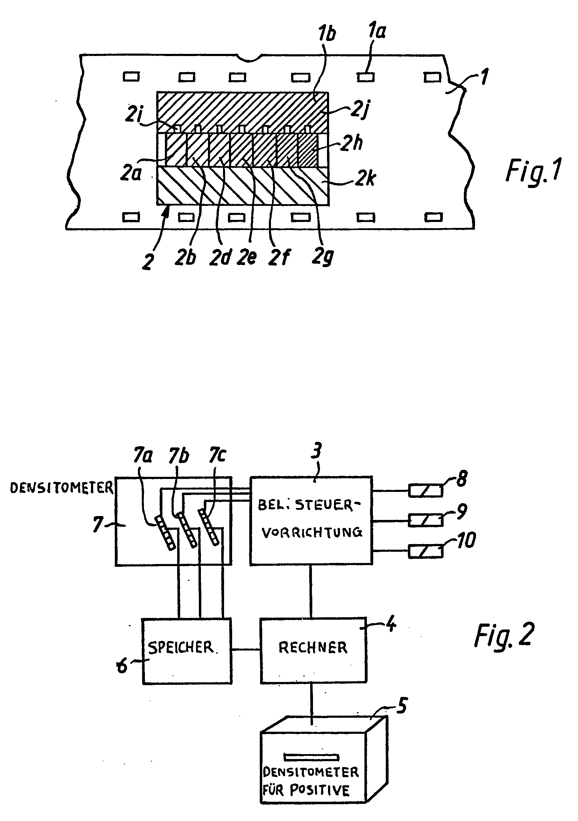

In Fig. 1 ist mit 1 ein Streifen eines Aufnahmematerials üblicher Konfektionierung bezeichnet, der Perforationslöcher 1 a zum Transport innerhalb der Aufnahmekamera aufweist. Auf einer einer üblichen Kopiervorlage entsprechenden Fläche 1 b ist ein synthetisches Test- oder Eichnegativ 2 aufbelichtet. Es enthält im Mittelbereich nebeneinander angeordnete Felder einer Grautreppe, die von völliger Durchlässigkeit im Feld 2 a zu einer mittleren Dichte im mittleren Feld 2 e bis zu einem Feld maximaler Schwärzung 2 h führt. Jeweils in räumlicher Zuordnung zu den Feldern der Grautreppe 2 a bis 2 h sind an deren Rand auf einer bestimmten Spur volständig durchlässige Steuermarken 2 i angeordnet, die bei der Ausmessung dieser Grautreppe jeweils anzeigen, wenn sich die nächste Stufe im Abtastbereich befindet. Die verbleibenden Flächen außerhalb der Grautreppe 2 j und 2 k sind so belichtet, daß der gesamte Bereich der Eichvorlage 2 eine mittlere Dichte und auch eine ungefähr neutrale Farbverteilung aufweist.

Die Eichvorlage 2 wird zweckmäßigerweise von einer Zentralstelle, z.B. dem Hersteller des jeweiligen Films, in der beschriebenen Weise belichtet und an den Verarbeiter des Films geliefert. Dort wird der Film unter den dort vorhandenen Bedingungen entwickelt, so daß insoweit gleiche Bedingungen für das Eichnegativ und später zu bearbeitende Filme vorliegen.

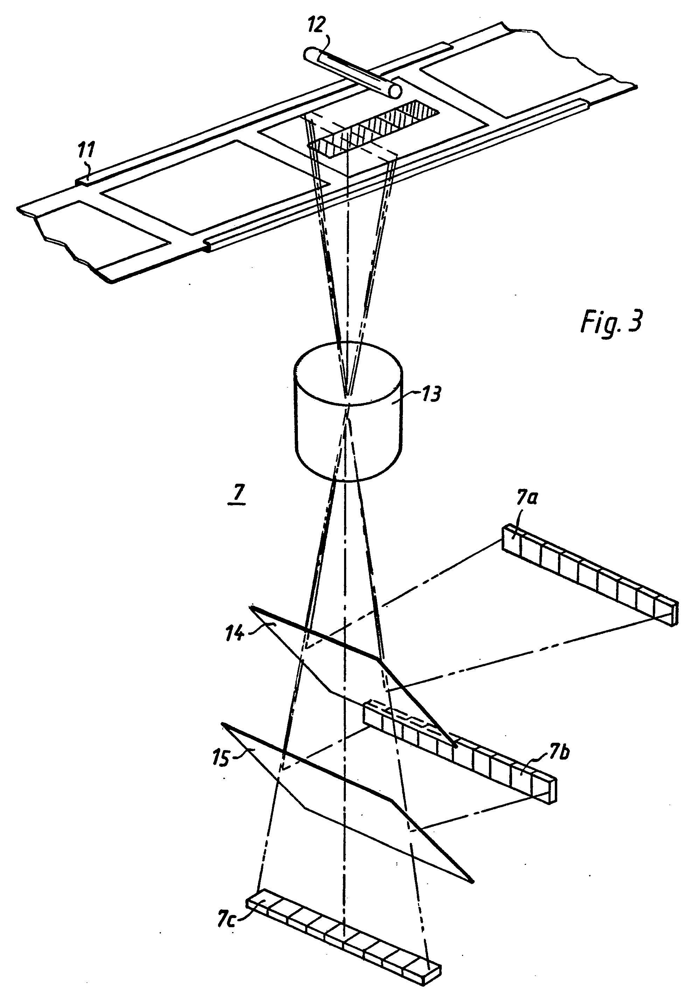

In dem Blockschaltbild gemäß Figur 2 ist mit 3 die Belichtungssteuervorrichtung angegeben, die in ihrem Aufbau etwa der in der DE—PS 2 246 544 entsprechen kann. Ergänzend sind dabei allerdings Widerstände zum Übernehmen der Korrekturwerte in die Belichtungszeitbemessung mit entsprechenden Stelleinrichtungen versehen, die über einen Rechner 4 angesteuert werden können. Der Rechner 4 ist einerseits verbunden mit einem Densitometer 5, das einen Schlitz zum Einführen der Kopien des Eichnegativs 2 aufweist, sowie mit einem Speicher 6, in dem Meßwerte für die einzelnen Farbdichten der Felder der Grautreppe 2 a bis 2 h gespeichert werden können. Diese Meßwerte werden von der fotoelektrischen Anordnung eines Densitometers 7 geliefert, das gemäß Fig. 3 aufgebaut sein kann. Rein schematisch sind drei Leisten von Fotoempfängern 7a, 7b und 7c mit einer Vielzahl von einzelnen Elementen angedeutet. Ein Abschnitt jeder Leiste kann in Zuordnung zur Lage der Grautreppe jeweils einen von deren Farbdichtewerten messen. Die einzelnen fotoelektrischen Empfänger 7a, b, c sind durch entsprechende Filter für bestimmte Farben sensibilisiert. Aus Zweckmäßigkeitsgründen ist das Densitometer 7 gleichzeitig Teil der fotoelektrischen Belichtungssteuervorrichtung und mißt die Dichtewerte der zu kopierenden Farbvorlagen und gibt diese an die Belichtungssteuervorrichtung 3 weiter. Die von der Belichtungssteuervorrichtung 3 festgelegten Kopierlichtmengen für die einzelnen Kopiervorlagen führen zur Bestromung von Magneten 8, 9 und 10, die jeweils einen Farbverschluß zur Beendigung einer Farbbelichtung betätigen.

In Fig. 3 ist das Densitometer zur Abtastung der Eichvorlage nochmals genauer dargestellt. Über der Bahn 11 für die Filmstreifen, u.a. den Film 1 mit dem Eichnegativ 2, ist eine als Stab ausgebildete Lichtquelle 12 angeordnet, die einen spaltförmigen Abschnitt der Negative gleichmäßig ausleuchtet. Dieser Abschnitt der Negative wird über ein Objektiv 13 abgebildet auf einen Strahlenteiler, bestehend aus zwei hintereinander geschalteten teildurchlässigen Spiegeln, von denen der erste Spiegel 14 den Blauanteil reflektiert, jedoch den grünen und den roten Anteil weiter gelangen läßt auf einen zweiten Spiegel 15, der den roten Anteil reflektiert und den grünen Anteil durchgehen läßt. Die Stellung der Spiegel ist so, daß der Blauauszug der Vorlage gerade auf die blauempfindliche Leiste 7 a von Lichtempfängern fällt, während der Rotauszug auf den linealförmigen Lichtempfänger 7 b abgebildet wird und der Grünanteil unreflektiert auf den Grünempfänger 7c fällt. Während der Abtastung der Eichvorlage ist jeweils nur der Abschnitt der Leisten aktiviert, auf den die Grautreppe 2 a bis h abgebildet wird.

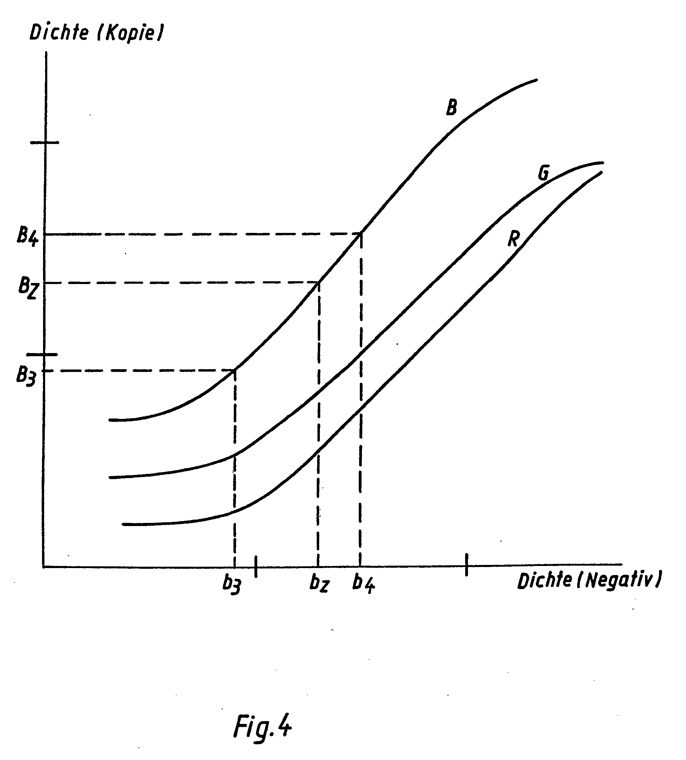

In Fig. 4 ist als Diagramm eine Übergangsfunktion dargestellt für den Übergang von den Dichten der Grautreppenabschnitte in der Eichvorlage in die entsprechenden Dichtewert der Kopie. Die Dichten der Eichvorlage sind für blau mit b angegeben und dem Index des jeweiligen Feldes, für grün mit g und für rot mot r. Die entsprechenden Dichtewerte der Kopie der Grautreppe sind mit großen Buchstaben B, G und R mit den entsprechenden Indices angegeben. Der besseren Übersichtlichkeit des Diagramms wegen sind jedoch hinweisende Bezugslinien nur für die blauen Werte angegeben. Schließlich ist mit $B_z$ der Zielwert für die Kopie des entsprechenden Blauauszuges des mittleren Feldes 4 angegeben. Dazu sind die jeweils einander zugeordneten Blauwerte von Vorlage und Kopie durch gestrichelte Linien mit Schnittpunkt auf der Blaukurve dargestellt. Durch dieses Diagramm ist durch Auftragen des tatsächlich gemessenen Blauwertes und der dadurch sichtbaren Abweichung vom Zielwert über die Linien zur Blaukurve und zur Abszisse feststellbar, welche Änderung in der Kopierlichtmenge notwendig ist, um bei der Nächsten Kopie genau den Zielwert im blauen Feld zu erreichen.

Die Wirkungsweise des erfingungsgemäßen Verfahrens anhand der dargestellten Vorrichtung ist wie folgt:

Die Farbdichtewerte für jedes der sieben Felder 2 a bis 2 h der Eichvorlage gemäß Fig. 1 werden mittels des Densitometers gemäß Fig. 3 gemessen und in den Speicher 6 eingebracht. Unmittelbar danach wird durch die Belichtungssteuervorrichtung in ihrem augenblicklichen Zustand automatisch eine Kopie der Eichvorlage erstellt. Diese wird nach ihrer Entwicklung im Densitometer 5 ausgemessen, wobei ebenfalls für jede Stufe der Grautreppe in der Kopie die drei Dichtewerte in den einzelnen Farben, bezeichnet mit den großen Buchstaben $B_u$, $G_v$ und $R_w$ gemessen und dem Rechner 4 zugeleitet werden. Für den Fall der richtigen Einstellung des Gerätes fallen die drei Farbdichtewerte des mittleren Grautreppenfeldes in der Kopie mit den jeweiligen Zielwerten $B_z$, $G_z$ und $R_z$ zusammen. Fallen die gemessenen Werte nicht mit den Zielwerten zusammen, ist eine Nachjustierung der Kopiervorrichtung erforderlich, d.h. die Belichtungssteuervorrichtung muß in ihrer Empfindlichkeit auf Meßlicht so abgeändert werden, daß die geänderte Kopierlichtmenge gerade zum Erreichen der Zieldichten in der mittleren Stufe der Grautreppenkopie führt.

Im Idealfall, wenn sich die einzelnen Farbbelichtungen nicht gegenseitig beeinflussen, erfolgt dies für jede Grundfarbe nach folgender Gleichung:

$$\Delta \log (I \cdot t) = d_4 - d_z = \frac{d_4 - d_3}{D_4 - D_3} \cdot (D_4 - D_z)$$

Die Dichten d mit Index entsprechen der gemessenen Dichte in der entsprechenden Stufe der Grautreppe der Eichvorlage, während die Dichten D mit Index die gemessene Dichte in der Entsprechenden Stufe der Grautreppenkopie angeben. $D_z$ ist die angestrebte Kopiedichte.

In aller Regel trifft diese Voraussetzung jedoch nicht zu, da die Filter vor den Meßelementen, die sensitometrischen Eigenschaften des Films und die Kopierfilter nicht in idealer Weise übereinstimmen. In diesem Fall ergeben sich die Änderungen der Kopierlichtmengen nach folgenden Gleichungen:

3

$$\Delta \log (I \cdot t)_B = \Delta_B + \alpha_{GB}\Delta_G + \alpha_{RB}\Delta_R$$

$$\Delta \log (I \cdot t)_G = \alpha_{BG}\Delta_B + \Delta_G + \alpha_{RG}\Delta_R$$

$$\Delta \log (I \cdot t)_R = \alpha_{BR}\Delta_B + \alpha_{GR}\Delta_G + \Delta_R$$

wobei die Indices B, G und R die Farben blau, grün und rot bedeuten und $|\alpha_{i,j}| < 1$ Koeffizienten sind, die abhängig von den Eigenschaften des Papiers, des Scanners und der Densitometer sind; und wobei

$$\Delta_B = \frac{b_4 - b_u}{B_4 - B_u} \cdot (B_4 - B_z)$$

$u = 3$, wenn $(B_z - B_4) < 0$
$u = 5$, wenn $(B_z - B_4) > 0$

$$\Delta_G = \frac{g_4 - g_v}{G_4 - G_v} \cdot (G_4 - G_z)$$

$v = 3$, wenn $(G_z - G_4) < 0$
$v = 5$, wenn $(G_z - G_4) > 0$

$$\Delta_R = \frac{r_4 - r_w}{R_4 - R_w} \cdot (R_4 - R_z)$$

$w = 3$, wenn $(R_z - R_4) < 0$
$w = 5$, wenn $(R_z - R_4) > 0$

wobei
$b_u$, $g_v$ und $r_w$ die Farbdichte des betreffenden Grautreppenfeldes in der Eichvorlage angibt,
$B_u$, $G_v$ und $R_w$ die Farbdichten in den betreffenden Stufen der Grautreppenkopie und
$B_z$, $G_z$ und $R_z$ die angestrebten Farbdichten des mittleren Feldes 4 der Grautreppenkopie bedeuten.

Diese Rechenoperationen werden im Rechner 4 ausgeführt und die ermittelten Änderungen der Kopierlichtmengen werden direkt in die entsprechenden Potentiometer der Belichtungssteuervorrichtung nach DE—PS 2 246 544 übernommen.

Zu Kontrollzwecken kann dann nochmals eine Kopie der Eichvorlage erstellt und diese auf dem Densitometer 5 ausgemessen werden. Der Vergleich der gemessenen Werte mit den jeweiligen Zielwerten müßte dann zum Ergebnis führen, daß die Zieldichtewerte im wesentlichen erreicht wurden. Nur für den Fall, daß die Abweichungen der gemessenen Dichtewerte von den Zieldichtewerten bei Erstellung der ersten Eichkopie deutlich größer als eine Stufe der Grautreppe sind, kann die lineare Interpolation gemäß den obengenannten Gleichungen zu Ungenauigkeiten führen, die noch einen zweiten Eichschritt erforderlich machen. Durch Annäherung der Kurven gemäß Figur 4 durch ein Polynom zweiten oder dritten Grades und mit erhöhtem Rechenaufwand läßt sich auch in diesen Fällen eine Eichung des Kopiergerätes mit einem einzigen Schritt erreichen.

Die beschriebene Eichung des Kopiergerätes läßt sich sowohl für die Ersteichung eines Gerätes als auch für die routine-mäßige Überwachung in mehr oder minder großen Zeitabständen zweckmäßig anwenden. Dabei können das Densitometer 5 und der Rechner 4 zu einer Einheit zusammengefügt sein, an die umschaltbar mehrere Belichtungssteuervorrichtungen 3 von Kopiergeräten angeschlossen sind. Bei einem Aufbau gemäß Figur 2 müßte dann der Speicher 6 dem Kopiergerät zugeordnet und durch eine umschaltbare Leitung mit dem Rechner verbunden sein.

Die Schwärzungskurven gemäß Figur 4 als Grundlage für die Durchführung der Rechenoperation lassen sich auch noch auf andere Weise als mittels einer Grautreppe gemäß Figur 1 ermitteln. Dort geschieht die Erzeugung unterschiedlicher Schwärzungen in den einzelnen Farben durch Anwendung vorbekannt unterschiedlicher Intensitäten des Kopierlichtes, hervorgerufen durch die vorbekannte Abstufung des Graukeils. Anstelle der durch Intensitätsänderung veränderten Kopierlichtmengen kann auch durch Änderung der Belichtungszeiten um vorbekannte Beträge die Kopierlichtmenge verändert werden. Zu diesem Zweck wird von einer Kopiervorlage bekannter Dichte eine erste Kopie mittels der fotoelektrischen Belichtungssteuervorrichtung gemacht. Daran anschließend wird eine zweite Kopie belichtet unter Anwendung einer sogenannten Dichtekorrektur von z.B. einer Stufe, d.h. die Belich-

0 020 855

tungszeit in allen drei Farben wird linear um einen bestimmten Prozentsatz erhöht, so daß die Änderung der Kopierlichtmenge direkt ins Verhältnis gesetzt werden kann zu der Änderung der Kopiedichte. Dies läßt eindeutige Schlüsse auf die Neigung der Schwärzungskurven in einem bestimmten Dichtebereich zu. Da nun erfahrungsgemäß die Schwärzungskurven der üblicherweise verwendeten Kopiermaterialien im wesentlichen alle sehr ähnlich verlaufen, ist aufgrund dieser Angaben über die Steilheit der Schwärzungskurve und die ungefähre Lage eines Punktes davon—gegeben durch die Dichte der Eichvorlage und deren durch die Belichtungssteuervorrichtung gesteuerte erste Kopie—die Festlegung von Parametern möglich, die bei sonst gleicher Kurvengestalt die unterschiedlichen Ausbildungen der Schwärzungskurven angeben. Eine solche Näherung durch eine mathematische Funktion dieser Schwärzungskurven ist z.B. im unteren Durchhangbereich durch eine E-Funktion und in dem daran anschließenden annähernd linearen Bereich durch eine Gerade mit hinreichender Genauigkeit möglich. Diese Funktionen sind dann in das Rechenprogramm des Rechners 4 eingegeben, so daß aufgrund der Meßwerte die Parameter für die genaue Kurvenform errechnet und daraus die erforderliche Veränderung der Einstellung der Belichtungssteuervorrichtung ermittelt werden können.

**Patentansprüche**

1. Verfahren zur Eichung eines Farbkopiergerätes mit einer fotoelektrischen Farbbelichtungssteuervorrichtung aufgrund der Meßergebnisse von Testkopien, die von einer Eichvorlage mit vorgegebenen Kopierlichtmengen in den Drei Grundfarben belichtet werden, gekennzeichnet durch folgende Schritte:

a) die Eichvorlage (1) wird anstelle einer Kopievorlage in das zu eichende Farbkopiergerät eingegeben;
b) die Eichvorlage wird mit den von der fotoelektrischen Farbbelichtungssteuervorrichtung (3) des Gerätes bestimmten Kopierlichtmengen jeder Grundfarbe auf das Kopiermaterial aufbelichtet;
c) das Kopiermaterial wird entwickelt;
d) es werden sowohl die Farbdichten der Eichvorlage (1) als auch die Farbdichten der Eichvorlagenkopie gemessen;
e) aus den Abweichungen der gemessenen Farbdichten der Eichvorlagenkopie (Istwerte) von den für die Eichvorlagenkopie gewünschten Farbdichten (Sollwerte) und den gemessenen Farbdichten der Eichvorlage werden die zur Erzielung der Sollwerte erforderlichen Änderungen der Kopierlichtmenge in den drei Grundfarben errechnet;
f) die Empfindlichkeit der fotoelektrischen Farbbelichtungssteuervorrichtung wird in jeder der drei Grundfarben so justiert, daß von ihr bei erneuter Belichtung der gleichen Eichvorlage die zur Erzielung der Sollwerte erforderlichen Kopierlichtmengen eingesteuert werden.

2. Verfahren nach Anspruch 1, dadurch gekennzeichnet, daß eine Eichvorlage verwendet wird, die eine Grautreppe mit einer ungeraden Anzahl von Stufen enthält und die Änderungen der Kopierlichtmengen $\Delta$ (i . t) nach folgenden Gleichungen bereichnet werden:

$$\Delta\log\ (\text{I}\ .\ \text{t})_B - \Delta_B + \alpha_{GB}\Delta_G + \alpha_{RB}\Delta_R$$

$$\Delta\log\ (\text{I}\ .\ \text{t})_G = \alpha_{BG}\Delta_B + \Delta_G + \alpha_{RG}\Delta_R$$

$$\Delta\log\ (\text{I}\ .\ \text{t})_R = \alpha_{BR}\Delta_B + \alpha_{GR}\Delta_G + \Delta_R$$

$$\text{mit}\ \ 0 \leq |\alpha_{i,j}| < 1$$

wobei die Indizes B, G und R die Farben blau, grün und rot bedeuten und $\alpha_{i,\,j}$ Koeffizienten für das Übersprechen der Farbbelichtungen in den beiden anderen Farben (i) in die Dichte der zu berechnenden Farbe j sind, die abhängig von den Eigenschaften des Papiers und der Densitometer für Messung der Negative une Kopiedichten sind; und wobei

$$\Delta_B = \frac{b_m - b_u}{B_m - B_u} \cdot (B_m - B_z)$$

$u = m - 1$ wenn $(B_z - B_m) < 0$
$u = m + 1$ wenn $(B_z - B_m) > 0$

$$\Delta_G = \frac{g_m - g_v}{G_m - G_v} \cdot (G_m - G_z)$$

$v = m - 1$ wenn $(G_z - G_m) < 0$
$v = m + 1$ wenn $(G_z - G_m) > 0$

5

$$\Delta_R \frac{r_m - r_w}{R_m - R_w} \cdot (R_m - R_z)$$

w=m−1 wenn $(R_z - R_m) < 0$
w=m+1 wenn $(R_z - R_m) > 0$

wobei

m als Index für das mittlere Feld der Grautreppe steht,

$b_u$, $g_v$ und $r_w$ die Farbdichte des betreffenden Grautreppenfeldes in der Eichvorlage angibt,

$B_u$, $G_v$ und $R_w$ die Farbdichten in den betreffenden Stufen der Grautreppenkopie und

$B_z$, $G_z$ und $R_z$ die angestrebten Farbdichten des mittleren Feldes (2e) der Grautreppenkopiebedeuten.

3. Verfahren nach Anspruch 1, dadurch gekennzeichnet, daß auf das Kopiermeterial eine zweite Kopie der Eichvorlage mit einer um einen bekannten Prozentsatz gegenüber der ersten Kopie veränderten Belichtungszeit aufbelichtet wird und daß zur Bestimmung der Schwärzungskurven der drei Grundfarben nur jeweils ein von ein und demselben Bereich der Eichvorlage mit annähernd bekannter Ausgangsdichte stammender Bereich der beiden Kopien ausgewertet wird, wobei die Kurven durch aufgrund der Erfahrung abschnittweise ähnlich verlaufende mathematische Funktionen angenähert werden, zu denen die ausgewerteten Kopiebereiche die Parameter liefern.

4. Verfahren nach Anspruch 3, dadurch gekennzeichnet, daß als mathematische Näherungsfunktionen im Durchhangbereich eine Normalverteilungskurve und im linearen Bereich eine Gerade verwendet wird.

5. Eichvorlage zur Verwendung bei einem Verfahren nach Anspruch 1, dadurch gekennzeichnet, daß die Eichvorlage eine Grautreppe mit Stufen bekannter Dichteabstufung und Farbanteile enthält und in Zuordnung zu den Stufen die Abtastung steuernde Marken aufweist und daß die Bereiche der Eichvorlage außerhalb der Grautreppe eine solche Dichte und Farbzusammenstellung aufweisen, daß die Eichvorlage insgesamt eine mittlere Dichte aufweist.

6. Vorrichtung zur Durchführung des Verfahrens nach Anspruch 1, 3 oder 4, dadurch gekennzeichnet, daß zur Durchführung der Rechenoperation ein Rechner (4), insbesondere ein Mikroprozessor vorgesehen ist, der mit einem Speicher 6 und einerseits mit einem ersten Densitometer (5) für die Eichvorlagenkopien sowie andererseits mit der Belichtungssteuervorrichtung (3) verbunden ist und aufgrund der von ihm errechneten, zur Erreichung der Solldichten erforderlichen Veränderung der Kopierlichtmengen die Verstellung der Belichtungssteuervorrichtung veranlaßt.

7. Vorrichtung mit den Merkmalen des kennzeichnenden Teils des Anspruches 6 zur Durchführung des Verfahrens nach Anspruch 2, dadurch gekennzeichnet, daß ein weiteres Densitometer (7) für die Messung der Dichtewerte in den drei Farben der Grautreppe (2) auf der Eichvorlage mit dem Speicher (6) verbunden ist.

8. Vorrichtung nach Anspruch 7, dadurch gekennzeichnet, daß als weiteres Densitometer die Abtasteinrichtung für die Kopiervorlage in der Belichtungssteuervorrichtung verwendet wird.

**Revendications**

1. Procédé pour étalonner un appareil de tirage en couleur comportant un dispositif photo-électrique de commande d'exposition en couleur sur la base des résultats de mesure d'épreuves d'essai exposées d'après un original d'étalonnage avec des quantités prescrites de lumière de tirage dans les trois couleurs de base, caractérisé par les étapes suivantes:

a) on introduit l'original d'étalonnage (1), au lieu d'un original de tirage, dans l'appareil de tirage en couleur à étalonner;

b) on expose la matière de tirage sous l'original d'étalonnage avec les quantités de lumière de tirage de chaque couleur de base qui sont déterminées par le dispositif photo-électrique de commande d'exposition en couler (3) de l'appareil;

c) on développe la matière de tirage;

d) on mesure aussi bien les densités de couleur de l'original d'étalonnage (1) que les densités de couleur de l'épreuve de l'original d'étalonnage;

e) en partant des écarts des densités de couleur mesurées de l'épreuve d'original d'étalonnage (valeurs instantanées) relativement aux densités de couleur désirées pour l'épreuve d'original d'étalonnage (valeurs de consigne) et des densités de couleur mesurées de l'original d'étalonnage, on calcule les modifications de la quantité de lumière de tirage, dans les trois couleurs de base, qui sont nécessaires pour obtenir les valeurs de consigne;

f) on ajuste la sensibilité du dispositif photo-électrique de commande d'exposition en couleur dans chacune des trois couleurs de base de façon telle que lors d'une exposition renouvelée du même original d'étalonnage, ce dispositif établisse les quantités de lumière de tirage nécessaires pour obtenir les valeurs de consigne.

2. Procédé selon la revendication 1, caractérisé par le fait que l'on utilise un original d'étalonnage contenant une échelle de gris à nombre impair d'échelons et que l'on calcule les variations $\Delta$ (I . t) des quantités de lumière de tirage selon les équations suivantes:

$$\Delta \log (I . t)_B = \Delta_B \alpha_{GB} \Delta_G + \alpha_{RB} \Delta_R$$

$$\Delta \log (I . t)_G = \alpha_{BG} \Delta_B + \Delta_G + \alpha_{RG} \Delta_R$$

$$\Delta \log (I . t)_R = \alpha_{BR} \Delta_B + \alpha_{GR} \Delta_G + \Delta_R$$

$$\text{avec } 0 \leqslant \alpha_{i,j} | < 1$$

les indices B, G et R signifiant les couleurs bleue, verte et rouge et $\alpha_{i,j}$ étant des coefficients pour la conversion des expositions en couleur dans les deux autres couleurs (i) en la densité de la couleur à calculer (j), qui dépendent des propriétés du papier et du densitomètre pour la mesure des négatifs et des densités d'épreuve et que l'on a aussi:

$$\Delta_B = \frac{b_m - b_u}{B_m - B_u} . (B_m - B_z)$$

$$u = m - 1 \quad \text{si } (B_z - B_m < 0$$
$$u = m + 1 \quad \text{si } (B_z - B_m > 0$$

$$\Delta_G = \frac{g_m - g_v}{G_m - G_v} . (G_m - G_z)$$

$$v = m - 1 \quad \text{si } (G_z - G_m < 0$$
$$v = m + 1 \quad \text{si } (G_z - G_m > 0$$

$$\Delta_R = \frac{r_m - r_w}{R_m - R_w} . (B_m - R_z)$$

$$w = m - 1 \quad \text{si } (R_z - R_m < 0$$
$$w = m + 1 \quad \text{si } (R_z - R_m > 0$$

$m$ représentant l'indice pour la zone centrale de l'échelle de gris, $b_u$, $g_v$ et $r_w$ indiquant la densité de couleur de la zone considérée de l'échelle de gris dans l'original d'étalonnage, $B_u$, $G_v$ et $R_w$ les densités de couleur dans les échelons considérés de l'épreuve d'échelle de gris et $B_z$, $G_z$ et $R_z$ les densités de couleur désirées de la zone centrale (2e) de l'épreuve d'échelle de gris.

3. Procédé selon la revendication 1, caractérisé par le fait que l'on expose sur la matière de tirage une deuxième épreuve de l'original d'étalonnage, avec un temps d'exposition modifié d'un pourcentage connu relativement à la première épreuve et que pour déterminer les courbes de noircissement des trois couleurs de base, on n'interprète à la fois qu'une seule région des deux épreuves, provenant d'une même région de l'original d'étalonnage avec une densité initiale approximativement connue, les courbes étant approchées par des fonctions mathématiques qui, sur la base de l'expression, ont une allure similaire par segments et pour lesquelles les régions d'épreuve interprétées fournissent les paramètres.

4. Procédé selon la revendication 3, caractérisé par le fait que comme fonctions mathématiques d'approche, on utilise dans la région de flèche, une courbe de distribution normale, et dans la région linéaire, une droite.

5. Original d'étalonnage pour l'utilisation dans un procédé selon l'une des revendications précédentes, caractérisé par le fait que l'original d'étalonnage contient une échelle de gris (2a à 2h) dont les échelons ont un échelonnement de densité et des proportions de couleurs connues et qu'il présente, en corrélation avec les échelons, des repères (2i) commandant l'exploration et que les régions (2j, 2k) de l'original d'étalonnage situées hors de l'échelle de gris présentent une densité telle et une composition de couleurs telle que l'original d'étalonnage présente dans son ensemble une densité moyenne.

6. Dispositif pour la mise en oeuvre du procédé selon l'une des revendications 1, 3 et 4, caractérisé par le fait que pour l'exécution de l'opération de calcul, il est prévu un calculateur (4), en particulier un microprocesseur qui est relié à une mémoire (6), à un premier densitomètre (5) pour les épreuves d'original d'étalonnage et au dispositif de commande d'exposition (3) et que, sur la base des modifications des quantités de lumière de tirage, calculées par lui et nécessaires pour atteindre les

**0 020 855**

densités de consigne, le calculateur provoque la modification du réglage du dispositif de commanae d'exposition.

7. Dispositif selon la revendication 6, pour la mise en oeuvre du procédé selon la revendication 2, caractérisé par le fait qu'un densitomètre supplémentaire (7) est relié à la mémoire (6) pour la mesure des valeurs de densité dans les trois couleurs de l'échelle de gris (2) sur l'original d'étalonnage.

8. Dispositif selon la revendication 7, caractérisé par le fait que comme densitomètre supplémentaire, on utilise le dispositif de commande d'exposition.

**Claims**

1. Method for calibrating a colour printing apparatus with a photoelectric colour exposure control device on the basis of the measurement results of test copies, which are exposed by a calibration pattern with predetermined printing light quantities in the three primary colours, characterised by the following steps:

a) the calibration pattern (1) is inserted instead of a printing pattern in the colour printing apparatus which is to be calibrated;

b) the calibration pattern is exposed onto the printing material with the printing light quantities—determined by the photoelectric colour exposure control device (3) of the apparatus—of each primary colour;

c) the printing material is developed;

d) both the colour densities of the calibration pattern (1) and the colour densities of the calibration pattern copy are measured;

e) the alterations to the printing light quantity in the three primary colours required to obtain the desired values are calculated from the deviations of the measured colour densities of the calibration pattern copy (actual values) from the colour densities (desired values) required for the calibration pattern copy and the measured colour densities;

f) the sensitivity of the photoelectric colour exposure control device is adjusted in each of the three primary colours such that, upon a renewed exposure of the same calibration pattern, the printing light quantities required to obtain the desired values are controlled.

2. Method according to Claim 1, characterised in that a caiibration pattern is used which comprises a grey scale with an odd number of steps and the alterations to the printing light quantities $(I \cdot t)$ are calculated according to the following equations:

$$\Delta\log (I \cdot t)_B = \Delta_B + \alpha_{GB}\Delta_G + \alpha_{RB}\Delta_R$$

$$\Delta\log (I \cdot t)_G = \alpha_{BG}\Delta_B + \Delta_G + \alpha_{RG}\Delta_R$$

$$\Delta\log (I \cdot t)_R = \alpha_{BR}\Delta_B + \alpha_{GR}\Delta_G + \Delta_R$$

with $0 \leqslant |\alpha_{i,j}| < 1$

in which the indices B, G and R represent the colours blue, green and red and $\alpha_{i,j}$ are coefficients for the interfering admixture of the colour exposures in the two other colours (i) into the density of the colour j which is to be calculated, which coefficients are dependent upon the properties of the paper and of the densitometer for measuring the negatives and printing densities; and in which

$$\Delta_B = \frac{b_m - b_u}{B_m - B_u} \cdot (B_m - B_z)$$

$u = m-1$ when $(B_z - B_m) < 0$
$u = m+1$ when $(B_z - B_m) > 0$

$$\Delta_G = \frac{g_m - g_v}{G_m - G_v} \cdot (G_m - G_z)$$

$v = m-1$ when $(G_z - G_m) < 0$
$v = m+1$ when $(G_z - G_m) > 0$

8

$$\Delta_R = \frac{r_m - r_w}{R_m - R_w} \cdot (R_m - R_z)$$

$w = m - 1$ when $(R_z - R_m) < 0$
$w = m + 1$ when $(R_z - R_m) > 0$

in which

$m$ represents an index for the central field of the grey scale,

$b_u$, $g_v$ and $r_w$ the colour density of the relevant grey scale field in the calibration pattern,

$B_u$, $G_v$ and $R_w$ the colour densities in the relevant steps of the grey scale copy and

$B_z$, $G_z$ and $R_z$ the desired colour densities of the central field (2e) of the grey scale copy.

3. Method according to Claim 1, characterised in that a second copy of the calibration pattern is exposed onto the printing material with an exposure time which is altered by a known percentage with respect to the first copy and in that, in order to determine the characteristic film curves of the three primary colours, only one region of the two copies originating from the same region of the calibration pattern and having an approximately known original density is evaluated in each case, the curves being approximated by mathematical functions which, according to experiments, extend similarly in sections and for which the evaluated printing regions provide the parameters.

4. Method according to Claim 3, characterised in that there are used as mathematical approximation functions a normal distribution curve in the dipping portion and a straight line in the linear portion.

5. Calibration pattern for use in a method according to Claim 1, characterised in that the calibration pattern comprises a grey scale with steps of a known density gradation and colour proportions and, in association with the steps, comprises marks controlling the scanning operation, and in that the density and colour composition of the calibration pattern outside the grey scale is such that, on the whole, the calibration pattern has an average density.

6. Device for carrying out the method according to Claim 1, 3 or 4, characterised in that a computer (4), particularly a microprocessor, is provided to perform the calculating operation, which computer (4) is connected to a store 6 and, on one hand to a first densitometer (5) for the calibration pattern copies and, on the other hand, to the exposure control device (3) and, on the basis of the alteration—calculated by the computer and necessary to obtain the required densities—of the printing light quantities, adjusts the exposure control device.

7. Device with the features of the characterising part of Claim 6 for carrying out the method according to Claim 2, characterised in that a further densitometer (7) is connected to the store (6) for measuring the density values in the three colours of the grey scale (2) on the calibration pattern.

8. Device according to Claim 7, characterised in that the scanning device for the printing pattern in the exposure control device is used as a further densitometer.

Fig.1

Fig. 2

Fig. 3

Fig.4